# EUROPEAN PATENT APPLICATION

(11) **EP 1 175 086 A1**
(43) Date of publication of application: **23.01.2002**
(21) Application number: 00115765.0
(22) Date of filing: 21.07.2000
(51) Int. Cl.: H04N 5/00, H04N 7/24

(54) **Network storage device including a demultiplexer**

(71) Applicant: Sony International (Europe) GmbH, 10785 Berlin (DE); Sony Electronics Inc., Park Ridge, New Jersey 07656-8003 (US)
(72) Inventor: Schwager, Andreas Advanced Techn. Center Stuttgart, 70327 Stuttgart (DE); Spalink, Gerd, Advanced Tech. Center Stuttgart, 70327 Stuttgart (DE); Szucs, Paul, Advanced Technol. Center Stuttgart, 70327 Stuttgart (DE); Buchner, Peter, Advanced Technol. Center Stuttgart, 70327 Stuttgart (DE); Smyers, Scott, Advanced Technol. Center Stuttgart, 70327 Stuttgart (DE)
(74) Representative: Müller . Hoffmann & Partner Patentanwälte

(57) **Abstract**

For allowing time shift applications with existing set top boxes (2) and audio/ video output devices a network storage device (1) which comprises a partial transport stream generator (4) to generate a partial transport stream (PTS) from a received transport stream (TS), and a data storage means (5) to store said partial transport stream (PTS). Further, a method to exchange the necessary information in-between the set top box (2) and the network storage device (1) is described.

## Description

The present invention concerns a network storage device, in particular a network storage device for storing a partial transport stream, e. g. to enable time shift applications, and to a method to store a partial transport stream on a network storage device.

DE 198 44 635 A1 describes an external hard disk as a video recording device connected to an IEEE 1394 bus system. Data is transmitted to said hard disk in an isochronous channel and the storage of data and the access to stored data is controlled through a TV set. Different possibilities to store and view at the same time are possible, i. e. to store a program while watching it simultaneously, to store a program and watch a different program, and to store a program and begin watching the stored program while the storage is not finished, i.e. to watch a program time shifted.

Therewith, the general idea and necessary hardware for time shifting is described. However, only selected video pictures can be stored which are displayed on the TV or another video viewing device within the network, i.e. it is only possible to store the complete content of an isochronous channel set up in-between a set top box receiving said program and generating a transport stream as content of said isochronous channel and said display device.

WO 98/59498 A1 describes a set top box for an IEEE 1394 serial bus network which divides a transport stream into several partial transport streams which are respectively distributed to different devices via a respective isochronous channel. Generally, audio/video streams are transmitted and stored within an IEEE 1394 network in an MPEG compressed format in order to reduce the amount of bandwidth and storage space required for a stream of data.

The distribution of MPEG-2 transport streams on the IEEE 1394 based home network as partial transport streams is described in EP 0 917 355 A1. This document describes all components necessary to generate correct partial MPEG-2 transport streams and how the program association table (PAT), the program map table (PMT) and the selection information table (SIT) have to be created for a valid partial MPEG-2 transport stream.

As described in DE 198 44 635 A1 an easy way to provide a time shifting application is to connect an external hard disk drive to the IEEE 1394 serial bus. A live stream can then be sent to and recorded on the hard disk drive and the recorded stream can be played back simultaneously from the hard disk drive and be decoded and displayed. In order to record the correct stream on the hard disk drive a transport stream de-multiplexer is required within the controlling device, i.e. the TV set, to decode program stream information (PSI) and service information (SI). This information must be used to assemble the correct stream to be recorded. A second de-multiplexer is required within the TV set to decode the program stream information and service information from the retrieved ecorded stream to extract the video and/or audio streams which should be supplied to a user.

Today's hardware usually supports only one de-multiplexer. With this technology a network set top box can be used either as a Network Tuner using its tuner, de-multiplexer, PID parser and IEEE 1394 interface, or as a display unit using its IEEE 1394 interface, de-multiplexer and decoder. Since the de-multiplexer is needed for both applications either the Network Tuner or the display unit can be in operation. Since basically both of these applications are needed for a Time Shift service, set top boxes with two de-multiplexers are provided. The first de-multiplexer is used to generate the partial transport stream to be recorded on the hard disk drive and the second de-multiplexer is used to supply the correct video and audio streams retrieved from the hard disk drive to the corresponding output devices.

Therefore, it is the object underlying the present invention to provide a network storage device, e. g. for enabling a time shift application, which allows to use today's hardware, i. e. set top boxes with one de-multiplexer.

This object is solved with a network storage device according to independent claim 1 and a method to store a partial transport stream on a network storage device according to independent claim 10. Preferred embodiments thereof are respectively defined in the following dependent claims.

According to the present invention a network storage device comprises a partial transport stream generator to generate a partial transport stream from a received transport stream, and a data storeage means to store said partial transport stream.

The method according to the present invention to store a partial transport stream on such a network storage device comprises the following steps within said network storage device: Receiving a transport stream transmitted from a network device, generating said partial transport stream from the received transport stream on basis of a content information indicating which content of the received transport stream should be stored, and supplying said generated partial transport stream to a data storage means within said network storage device.

Therewith, on the market existing set top boxes which include only one de-multiplexer are enabled for time shift applications, since the de-multiplexer within the set top box can be used to extract the video and/or audio streams which should be supplied to the respective output devices. Further, manufacturers are able to build cheaper set top boxes and the costs for the time shift application arise at the time when such an application should be implemented, i. e. at production of the network storage device.

Preferably, said partial transport stream generator includes the functionality to perform package filter and replacement operations. Alternatively or additionally, said partial transport stream generator comprises a fully functional transport stream de-multiplexer which is able to generate said partial transport stream on basis of the wanted content thereof. In this case said transport stream de-multiplexer might additionally comprise a section filter.

Therewith, the partial transport stream generator according to the present invention is able to generate correct partial transport streams as it is e. g. described in the above mentioned EP 0 917 355 A1 which contents are herewith incorporated into this specification. In case the partial transport stream generator includes a fully functional transport stream de-multiplexer only identifiers of parts of the transport stream which should be recorded have to be indicated and a correct partial transport stream, i.e. IEEE 1394 compliant partial transport stream, is generated. Otherwise, in case the partial transport stream generator includes only the functionality to perform package filter and replacement operations, modified and newly generated information tables to generate a correct partial transport stream have to be received and appropriately inserted to generated the partial transport stream.

Further preferably, said transport stream generator might receive information about the content of said partial transport stream to be generated via packets of the received transport stream or via at least one asynchronous command comprising said information which is received by a controller within the network storage device and supplied to said transport stream generator.

Therewith, it is possible to control the content of the generated partial transport stream which gets recorded via another network device, e. g. via the set top box or via a television set, which is supplying the whole transport stream to the network storage device.

Still further preferably, said data storage means is able to simultaneously record said partial transport stream and reproduce said partial transport stream at the same time or time shifted and/or at least one other recorded partial transport stream.

Therewith, the whole functionality for a time shift application is given as it is e. g. also described in the above mentioned DE 198 44 635 A1.

Further preferably, said data storage means is realized by a hard disk drive. Alternatively, other storage means which allow a fast enough access for writing and reading might also be used.

Still further preferably, said network storage device according to the present invention is adapted to the IEEE 1394 standard.

The method according to the present invention preferably comprises additionally the following steps: Deriving a live broadcast service information of the received transport stream within the network storage device, transmitting said live broadcast service information from said network storage device to said network device and transmitting said content information which is determined on basis of said live broadcast service information from said network device to said network storage device.

Therewith, a procedure to control the content of the partial transport stream generated and to be stored within the network storage device accordingto the present invention from remote is established. This preferred embodiment according to the present invention enables a control of the network storage device e. g. through an existing set top box or display device. Further, the network storage device which might comprise a relatively noisy hard disk drive can be connected to the network at an arbitrary location independently from any considerations in respect to a direct control, e. g. via a remote control working with infra-red light or any other wired (POF) or wireless connection (RF).

Further preferably, said content information might be transmitted via packets inserted into the received transport stream. Advantageously, in this case the network device transmitting said transport stream to said network storage device determines predetermined tables to be valid for the partial transport stream to be recorded and inserts them as one or more packets into the transport stream. The network strorage device according to the present invention then generates the valid partial transport stream based on this information by replacing and/or inserting certain information tables and suppressing unwanted contents of the received transport stream and supplies it to the data storage means.

Alternatively or additionally said network storage device according to the present invention receives said content information via at least one asynchronous command. In this case the whole generation of the partial transport stream to be recorded is performed within the network storage device according to the present invention. The network device supplying the transport stream only needs to secure that the transmitted transport stream complies to the used network standard.

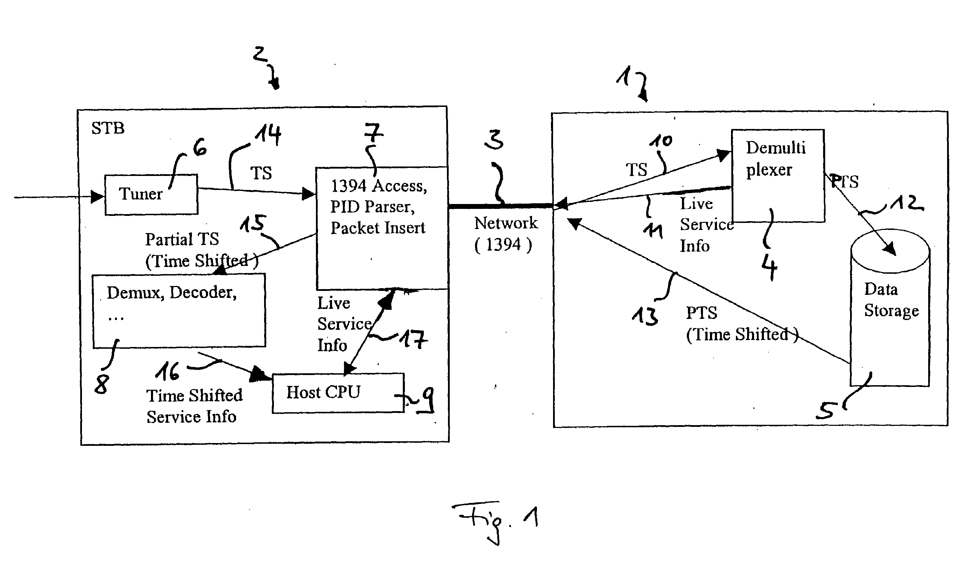

Further features and advantages of the network storage device and method to store a partial transport stream on a network storage device according to the present invention are elucidated by the following description of an exemplary embodiment thereof taken in conjunction with the accompanying drawing, wherein
- **Fig. 1**: shows a preferred embodiment of a network storage device according to the present invention connected to a set top box via a network.

Fig. 1 shows a set top box 2 which is connected to an IEEE 1394 network 3 to which a network storage device 1 according to the present invention is also connected

The set top box 2 comprises a tuner 6, an IEEE 1394 interface 7 providing IEEE 1394 access, a packet identifier (PID) parser function and a packet insert function, a first de-multiplexer 8 which also has a decoder function, and a host CPU 9. Further, the set top box 2 comprises a first unidirectional connection 14 for the Transport Stream (TS) from the tuner 6 to the IEEE 1394 interface 7, a second unidirectional connection 15 for the Partial TS (PTS), if the time shift is in operation, from the IEEE 1394 interface 7 to the first de-multiplexer 8, a third unidirectional connection 16 from first de-multiplexer 8 to the host CPU 9 for the Service Information derived out of the PTS, and a first bidirectional connection 17 for asynchronous commands and controlling 1394 Access, PID Parser and Packet Insert from the IEEE 1394 interface 7 to the host CPU 9. Therewith, the set top box 2 is generally constructed like a set top box according to the prior art. Additional connections disclosed above and/or functionality which will be discussed below is generally available with a new software or a software upgrade due to the construction of today's set top boxes.

The network storage device 1 according to the present invention comprises a second de-multiplexer 4 and a data storage 5. Further, the network storage device 1 comprises a fourth unidirectional connection 10 for the TS from the IEEE 1394 network to the second de-multiplexer 4, a fifth unidirectional connection 11 for the asynchronous commands from the second de-multiplexer 4 to the IEEE 1394 network, a sixth unidirectional connection 12 for the PTS to be stored from the second de-multiplexer 4 to the data storage 5, and an seventh unidirectional connection 13 for the play back PTS from the data storage 5 to the IEEE 1394 network 3. Alternatively, the fourth and fifth unidirectional connections 10 and 11 could be realized as a second bidirectional connection.

To do a time shift application with such an arrangement according to the present invention first the tuner 6 of the set top box 2 forwards a received transport stream TS to the IEEE 1394 interface 7 via the first unidirectional connection 14 and the PID parser and the packet insert functions within the IEEE 1394 interface 7 build a digital video broadcast (DVB) compliant partial transport stream which gets sent over the IEEE 1394 network 3 to the network storage device 1.

Thereafter, the second de-multiplexer 4 inside the network storage device 1 receives the transport stream TS via the fourth unidirectional connection 10 and derives the live broadcasted DVB information out of the transport stream to send it via the fifth unidirectional connection 11 as an asynchronous IEEE 1394 command to the host CPU 9 of the set top box 2. The host CPU 9 of the set top box receives the live service information via the IEEE 1394 network 3, the IEEE 1394 interface 7 and the first bidirectional connection 17.

Then, the host CPU 9 of the set top box 2 allows an access to the transmitted live service information, i.e. actual service information of the transport stream, to allow the selection of a partial transport stream which shall be recorded on the hard disk 1, e. g. according to the wants of a user. The necessary information to generate the partial transport stream PTS within the network storage device 1 according to the present invention may then be transmitted from the host CPU 9 to the second de-multiplexer 4 within the network storage device 1 either via packets inserted into the transport stream TS which are generated by the host CPU 9, sent to the IEEE 1394 interface 7 via the first bidirectional connection 17 and inserted into the transport stream TS by the packet inserted function within the IEEE 1394 network interface 7 in the set top box 2 or in a similar manner via asynchronous commands transmitted additionally to and independently from the transport stream TS to a controller within the network storage device 1 which is not shown in Fig. 1.

Based on this information the second de-multiplexer 4 within the network storage device 1 generates the partial transport stream PTS with the wanted content and supplies it to the data storage 5 via the sixth unidirectional connection 12.

The recorded partial transport stream can be played back e.g. after a time delay from the data storage 5 via the seventh unidirectional connection 13, the IEEE 1394 network 3, the IEEE 1394 interface 7 and the first de-multiplexer 8 of the set top box 2. The host CPU of the set top box 2 receives the time shifted service information extracted from the received partial transport stream PTS which is time shifted played back from the data storage 5 and was created before recording by the second de-multiplexer 4. The second de-multiplexer 4 was controlled to do this from the set top box 2, e.g. by user operation.

Fig. 1 shows not all components required within the network storage device 1 according to the present invention, the set top box 2 and the IEEE 1394 network 3, but only the components necessary to carry out the invention. Of course, additional components necessary to comply with the IEEE 1394 standard have to be additionally provided although not shown, e.g. a second IEEE 1394 interface within the network storage device 1.

The following table 1 shows the modification of the received transport stream by the second de-multiplexer 4 to generate a partial transport stream with wanted content to be recorded within the data storage 5 in case the second de-multiplexer 4 within the network storage device 1 can only do simple package filter and replacement operations based on the packet identifier (PID). In this case the second de-multiplexer 4 within the network storage device 1 has to receive the service information table (SIT) from the set top box 2 which can be generated within the host CPU 9 to be able to generate the wanted partial transport stream. Further, the program allocation table (PAT) and the program map table (PMT) which have to be modified to generate a valid partial transport stream PTS within the network storage device 1 are also received from the set top box 2. However, the set top box 2 only determines the necessary information and modifications for SIT, PAT and PMT on basis of Conditional Access Table (CAT), Service Description Table (SDT), Event Information Table (EIT), PMT and PAT obtained from the transport stream TS by the second de-multiplexer 4 within the network storage device 1 so that the first de-multiplexer 8 within the set top box 2 is not used at all for the generation of the partial transport stream PTS.

**Table 1**

| | **TS sent from set top box 2 over IEEE 1394 network 3 to network storage device 1** | **Asynchronous information between set top box 2 and network storage device 1** | **second de-multiplexer 4 in network storage device 1 storing DVB compliant partial TS on data storage 5** |
|---|---|---|---|
| **PAT** | Send original | Send original PAT back to set top box 2. Receive modified PAT from set top box 2. | Replace original PAT with modified PAT. The stored PAT shall contain only associations to the desired program for recording. |
| **PMT** | Send original | Send original PMT back to set top box 2. Receive modified PMT from set top box 2. | Replace original PMT with modified PMT. The new PMT shall contain only PIDs to the desired services for recording. |
| **NIT, BAT, TDT, TOT, RST, ST** | Remove | | |
| **CAT, SDT, EIT** | Send original | Send original SDT, EIT, CAT back to set top box 2. Receive derived SIT from set top box 2. | Replace SDT, EIT, CAT by SIT |
| **Video, Audio, Data of desired program(s)** | Send original | | Store |
| **Video, Audio, Data of non desired program(s)** | Remove | | |

The removing function within the set top box 2 is performed by the PID parser functionality of the IEEE 1394 interface 7. Therefore, to generate the TS sent from the set top box 2 over IEEE 1394 network 3 to the network storage device 1 the first de-multiplexer 8 within the set top box 2 is not used.

Table 2 shows the operations necessary to generate the correct partial transport stream in case the network storage device 1 contains a fully functional second de-multiplexer 4 including a section filter in which case the only information that needs to be passed with asynchronous commands from the set top box 2 to the network storage device 1 is the seleced service identifier's. The modified PAT and PMT as well as the SIT necessary to generate a valid partial transport stream will be derived within the network storage device 1 by the second de-multiplexer 4.

Within a section filter the transport packets of a MPEG 2 transport stream are examined for a certain combination of bits which is a parameter to the filter. If the combination of bits matches the parameter, data from the transport packet is used to assemble a desired section. The final output of a section filter are complete sections. A section is a more powerful unit of information than a transport packet, because it has a variable size, i.e. it can be larger or smaller than a transport packet, and a cyclic redundancy check (CRC) is possible.

**Table 2**

| | **TS sent from set top box 2 over IEEE 1394 network 3 to network storage device 1** | **Second de-multiplexer 4 operation in network storage device 1** | **Network storage device 1 storing DVB compliant partial TS on data storage 5** |
|---|---|---|---|
| **PAT** | Send original | Modify PAT | Replace PAT. The stored PAT shall contain only associations to the desired program for recording. |
| **PMT** | Send original | Modify PMT | Replace PMT. The new PMT shall contain only PIDs to the desired services for recording. |
| **NIT, BAT, TDT, TOT, RST, ST** | Remove | | |
| **CAT, SDT, EIT** | Send original | Derive SIT | Replace SDT, EIT, CAT by SIT |
| **Video, Audio, Data of desired program(s)** | Send original | | Store |
| **Video, Audio, Data of non desired program(s)** | Remove | | |

In both cases the IEEE 1394 interface 7 within the set top box 2 only removes the Network Information Table (NIT), the Bouquet Association Table (BAT), the Time and Data Table (TDT), the Time Offset Table (TOT), the Running Status Table (RST), the Stuffing Table (ST), and the Video, Audio, and Data of non desired program(s) from the transport stream TS received from the tuner 6 to generate an IEEE 1394 compliant transport stream which can be transmited via the IEEE 1394 network 3. As mentioned above, in both cases the first de-multiplexer 8 within the set top box 2 is not involved in the generation of the partrial transport stream PTS so that its capacity can be used for distibuting said partial transport stream or parts thereof during retrieval of the partial tansport stream PTS from the data storage 5 of the network storage device 1 via the IEEE 1394 network 3 to the respective output device(s).

Of course, as mentioned above, the invention is also not limited to time shifting applications, but can be used for every kind of data storage applications within a network, preferably an IEEE 1394 network.

## Claims

1. Network storage device (1), **characterized by**
- a partial transport stream generator (4) to generate a partial transport stream (PTS) from a received transport stream (TS), and
- a data storage means (5) to store said partial transport stream (PTS).

2. Network storage device (1) according to claim 1, **characterized in that** said partial transport stream generator (4) is able to perform packet filter and replacement operations.

3. Network storage device (1) according to claim 1 or 2, **characterized in that** said partial transport stream generator (4) comprises a fully functional transport stream de-multiplexer which is able to generate said partial transport stream (PTS) on basis of the wanted content thereof.

4. Network storage device (1) according to claim 3, **characterized in that** said transport stream de-multiplexer comprises a section filter.

5. Network storage device (1) according to anyone of claims 1 to 4, **characterized in that** said transport stream generator (4) retrieves infomation about the content of said partial transport stream (PTS) to be generated via packets of the received transport stream (TS).

6. Network storage device (1) according to anyone of claims 1 to 5, **characterized by** a controller receiving infomation about the content of said partial transport stream (PTS) to be generated via at least one asynchronous command and supplying said information to said transport stream generator (4).

7. Network storage device (1) according to anyone of claims 1 to 6, **characterized in that** said transport stream generator (4) supplies live service information of said received transport stream (TS) to a network device (2) transmitting said received transport stream (TS).

8. Network storage device (1) according to anyone of claims 1 to 7, **characterized in that** said data storage means (5) is able to simultaneously record said partial transport stream (PTS) and reproduce said partial transport stream (PTS) at the same time or time shifted and/or at least one other recorded partial transport stream.

9. Network storage device (1) according to anyone of claims 1 to 8, **characterized by** an adaptation to the IEEE 1394 standard.

10. Method to store a partial transport stream (PTS) on a network storage device (1), **characterized by** the following steps within said network storage device (1):
- receiving a transport stream (TS) transmitted from a network device (2),
- generating said partial transport stream (PTS) from the received transport stream (TS) on basis of a content information indicating which content of the received transport stream (TS) should be stored, and
- supplying said generated partial transport stream (PTS) to a data storage means (5) within said network storage device (1).

11. Method according to claim 10, **characterized by** the following steps:
- deriving a live broadcast service information of the received transport stream (TS) within the network storage device (1),
- transmitting said live broadcast service information form said network storage device (1) to said network device (2),
- transmitting said content information which is determined on basis of said live broadcast service information from said network device (2) to said network storage device (1).

12. Method according to claim 11, **characterized in that** said content information is transmitted via packets inserted into the received transport stream (TS).

13. Method according to claim 11 or 12, **characterized in that** said content information is transmitted via asynchronous commands.
